# EUROPEAN PATENT SPECIFICATION

(11) **EP 3 483 135 B1**
(45) Date of publication and mention of the grant of the patent: **27.01.2021**
(21) Application number: 17824226.9
(22) Date of filing: 04.07.2017
(51) Int. Cl.: C04B 38/06, B01D 39/20, B01D 46/00, C04B 35/478, C04B 38/00

(54) **HONEYCOMB STRUCTURE**
WABENSTRUKTUR
STRUCTURE EN NID D'ABEILLES

(30) Priority: 05.07.2016 JP 2016133514
(43) Date of publication of application: 15.05.2019
(73) Proprietor: Ibiden Co., Ltd., Ogaki-shi, Gifu 503-8604 (JP)
(72) Inventor: OHNO, Kazushige, Ibi-gun Gifu 501-0695 (JP); YAMAYOSE, Kazunori, Ibi-gun Gifu 501-0695 (JP); HIGUCHI, Tatsuhiro, Ibi-gun Gifu 501-0695 (JP)
(74) Representative: Hoefer & Partner Patentanwälte mbB
(86) International application number: PCT/JP2017/024446
(87) International publication number: WO 2018/008623

(56) References cited:
- EP-A1- 2 415 730
- EP-A1- 2 546 212
- EP-A1- 2 939 992
- WO-A1-2014/014059
- WO-A1-2014/014059
- JP-A- 2007 076 984
- JP-A- 2011 241 116
- JP-A- 2015 174 036

## Description

The present invention relates to a honeycomb structure that includes a wall portion formed from an aluminum titanate-alumina composite ceramic.

### BACKGROUND ART

Patent document 1 discloses an aluminum magnesium titanate-alumina composite ceramic including aluminum magnesium titanate and alumina of a specified composition ratio. Patent document 1 describes that the aluminum magnesium titanate-alumina composite ceramic has a small thermal expansion coefficient and is thus applicable to "exhaust gas filters and catalyst carriers used to purify exhaust gas of internal combustion engines such as diesel engines and gasoline engines."

Patent document EP 2939992 A1 discloses a honeycomb structure comprising a wall portion including a base material and a pore portion.

### PRIOR ART LITERATURE

### PATENT LITERATURE

Patent Document 1: Japanese Patent No. 4903821

### SUMMARY OF THE INVENTION

### PROBLEM TO BE SOLVED BY THE INVENTION

The exhaust gas purification filter may have, for example, a honeycomb structure. In such a case, the honeycomb structure is exposed to high temperatures. Thus, even if the honeycomb structure is formed from an aluminum titanate-alumina composite ceramic, there is a need for high mechanical strength when in use in addition to low thermal expansibility. This invention is based on the finding through intensive research by the inventors that, depending on the distribution structure of alumina and aluminum titanate, the thermal shock resistance resulting from the low thermal expansibility and the mechanical strength of the honeycomb structure when in use can be increased.

### MEANS FOR SOLVING THE PROBLEM

A honeycomb structure that solves the above problem includes a wall portion that includes a base material portion and a pore portion. A ratio of the pore portion in the wall portion is 40 to 70% by volume. The base material portion is formed from an aluminum titanate-alumina composite ceramic containing 10 to 30% by volume of alumina. The alumina is contained in the aluminum titanate so that an area ratio of the alumina occupying a portion contacting the pore portion in a surface area of the base material portion is less than 10%.

This structure has the distribution structure in which the alumina is contained in the aluminum titanate so that the area ratio of the alumina occupying the portion contacting the pore portion in the surface area of the base material portion is less than 10%. This allows for most of the frames in the base material portion to be formed from the aluminum titanate. This maintains low thermal expansibility of the aluminum titanate. Additionally, thermal shock resistance is increased when combined with high thermal conductivity of the alumina contained in the aluminum titanate.

Further, the high temperature when in use causes thermal expansion of the contained alumina and reduces the size of gaps resulting from fine cracks formed in the aluminum titanate. This increases mechanical strength of the honeycomb structure.

In the above honeycomb structure, it is preferred that the alumina has an average particle diameter of 1 to 20 µm. With this structure, the alumina contained in the base material portion raises the thermal conductivity and increases the thermal shock resistance.

In the above honeycomb structure, it is preferred that the aluminum titanate-alumina composite ceramic contains silicon element and magnesium element. This structure restricts thermal decomposition of the aluminum titanate.

In the above honeycomb structure, it is preferred that an average diameter of pores in the pore portion be 10 to 25 µm. This limits the pressure loss when the honeycomb structure is used in an exhaust gas purification filter.

### EFFECTS OF THE INVENTION

The present invention succeeds in increasing thermal shock resistance and mechanical strength of the honeycomb structure.

### BRIEF DESCRIPTION OF THE DRAWINGS

Fig. 1 is a perspective view of a honeycomb structure.
Fig. 2 is a photomicrograph of the honeycomb structure.
Figs. 3(a) and 3(b) are enlarged schematic views of a wall portion of the honeycomb structure.
Fig. 4 is a photomicrograph of a honeycomb structure according to example 1.
Fig. 5 is a photomicrograph of a honeycomb structure according to example 2.
Fig. 6 is a photomicrograph of a honeycomb structure according to example 3.
Fig. 7 is a photomicrograph of a honeycomb structure according to comparative example 1.
Fig. 8 is a photomicrograph of a honeycomb structure according to comparative example 2.

### MODES FOR CARRYING OUT THE INVENTION

A honeycomb structure according to one embodiment will now be described.

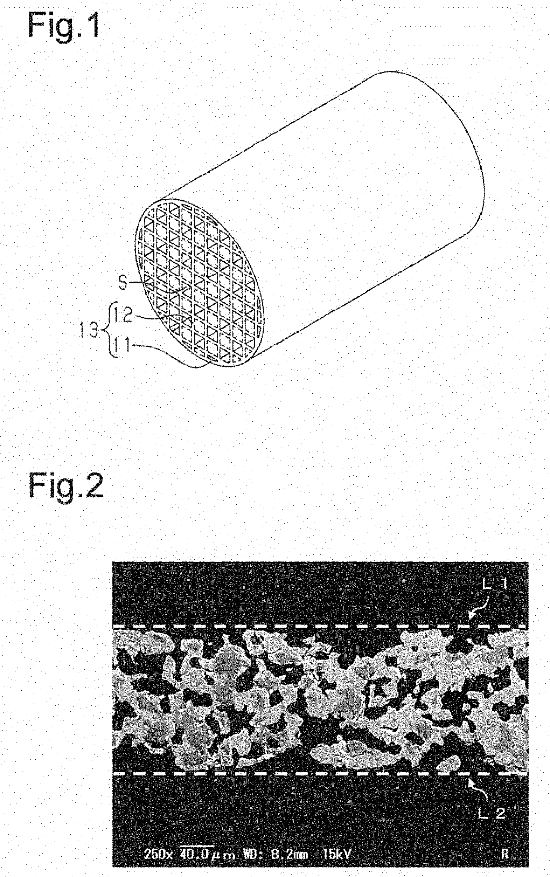

As shown in Fig. 1, a honeycomb structure according to the present embodiment includes a tubular circumferential wall 11 and partition walls 12 forming a honeycomb-shaped cross-section and defining a plurality of cells S extending inside the circumferential wall 11 in an axial direction of the circumferential wall 11. The circumferential wall 11 and the partition walls 12 form a wall portion 13. The structure of the cells in the honeycomb structure is not particularly limited and may have, for example, the partition walls 12 having a thickness of 0.1 to 0.7 mm and a cell density of 6.2 to 124 cells per 1 cm².

Fig. 2 shows a photomicrograph of a cross-section of the wall portion 13 of the honeycomb structure. In Fig. 2, the wall portion 13 is a region between hypothetical lines L1 and L2 that shows the cross-section in a thickness-wise direction of the wall portion 13. In the image, the wall portion 13 includes portions that are colored in light-gray, dark-gray, and black. The light-gray portions and the dark-gray portions form base a material portion. Further, the black portions form a pore portion. The dark-gray portions are distributed in a state surrounded by the light-gray portions, that is, in a state contained in the light-gray portions. The term "contain" will be described later. The light-gray portions are mainly formed from aluminum titanate, and the dark-gray portions are mainly formed from alumina. The content rate of alumina in the base material portion is 10 to 30% by volume. More preferably, the content rate of the alumina is 10 to 20% by volume. The content rate of alumina in the above value range increases thermal conductivity compared to when the base material portion is formed only from aluminum titanate while keeping the thermal expansibility of the wall portion low. Accordingly, the thermal shock resistance is increased. Further, the strength is increased when in use at a high temperature. The base material portion contains silicon elements and magnesium elements (not shown in Fig. 2). The silicon elements and the magnesium elements are contained in a form of a solid solution of aluminum titanate or in a form of an oxide. Although content rates of the silicon elements and the magnesium elements are not particularly specified, it is preferred that each content rate is 0.1 to 5% by mass. The content rates of the silicon elements and the magnesium elements in the above value range restrict thermal decomposition of the aluminum titanate.

As shown in Fig. 2, a ratio of the pore portion in the wall portion, that is, a porosity of the wall portion is 40 to 70% by volume. For example, when using the honeycomb structure in an exhaust gas purification filter for an internal combustion engine, the porosity of the wall portion of 40 to 70% by volume allows for favorable pressure loss and capturing of fine particles included in exhaust gas. The alumina in the dark-gray portions is distributed in a state contained in the aluminum titanate in the light-grey portions. Here, "contain" is referred to as a state in which the alumina is encompassed by the aluminum titanate. More specifically, the exterior surface of the alumina is in a state covered by the aluminum titanate. A ratio of area of the alumina that contacts the pore portion in a surface area of the base material portion is less than 10%, preferably, less than or equal to 5%. A volume ratio of the alumina and the area ratio of the alumina contacting the pore portion in the surface area of the base material portion can be obtained as described below. First, a photomicrograph of a cross-section of the wall portion 13 is taken at a magnification of 250 times. Then, binary processing is performed on the photomicrograph using a known image analysis software (LUZEX AP Ver. 1.54 manufactured by NIRECO CORPORATION) to distinguish an aluminum titanate portion, an alumina portion, and a pore portion of the base material portion. Subsequently, the area ratio of the alumina portion (area of alumina portion/area of base material portion) is calculated from the photomicrograph. The area ratios of the alumina portion at any five locations are calculated. An average value of the area ratios is calculated as the volume ratio of the alumina. Next, a total length of a boundary between the base material portion and the pore portion is obtained. In the same manner, binary processing is performed on the photomicrograph to distinguish the aluminum titanate portion and the alumina portion at the boundary of the base material portion. Then, a ratio of the alumina portion at the boundary (length of boundary between alumina portion and pore portion/length of boundary between base material portion and pore portion) is obtained. The ratios of alumina portion at any five locations are calculated. An average value of the ratios of alumina portion is set as the area ratio of the alumina contacting the pore portion in the surface area of the base material portion.

Preferably, the alumina particles in the base material portion have an average diameter of 1 to 20 µm). The average diameter of the alumina particles can be obtained as described below.

In the same manner as described above, a photomicrograph of a cross-section of the wall portion 13 is taken at a magnification of 250 times. Binary processing is performed on the photomicrograph using a known image analysis software (LUZEX AP Ver. 1.54 manufactured by NIRECO CORPORATION) to distinguish an aluminum titanate portion, an alumina portion, and a pore portion of the base material portion. The area of the alumina portion is calculated, and the diameter in circle equivalent is used as the value for the diameter of the alumina particles. The diameter of the alumina particles is measured at each alumina portion in five photomicrographs within a detection range of the image analysis software. An average value of the diameters is set as the average diameter of the particles.

A method for manufacturing the honeycomb structure including the wall portion formed from the aluminum titanate-alumina composite ceramic according to the present embodiment will now be described. The honeycomb structure is manufactured by sequentially performing a mixing process, a molding process, and a firing process as described below.

### Mixing Process

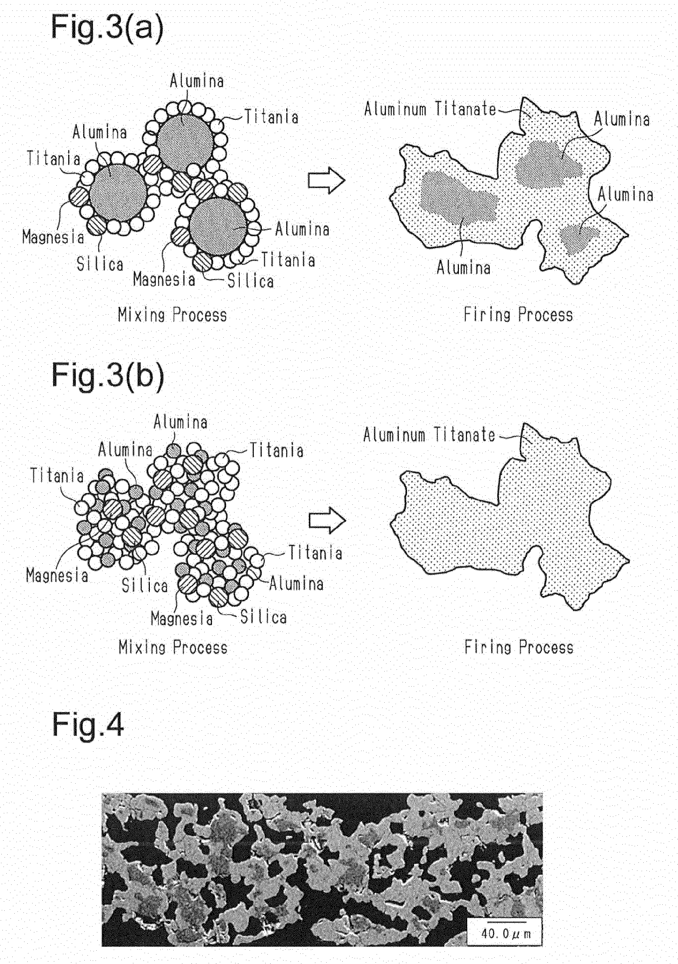

As shown in Fig. 3(a), the mixing process is a process for producing a mixture by mixing raw materials which include particles of alumina, titania, silica, and magnesia. The raw materials include alumina particles with an average diameter of 20 to 50 µm, titania particles with an average diameter of 0.1 to 1 µm, silica particles with an average diameter of 5 to 20 µm, and magnesia particles with an average diameter of 1 to 10 µm, where the average diameter of alumina particles ≥ the average diameter of silica particles ≥ the average diameter of magnesia particles ≥ the average diameter of titania particles is satisfied. The average diameters of alumina particles and silica particles may be the same at 20 µm where the ranges of average diameters overlap. The average diameters of titania particles and magnesia particles may be the same at 1 µm where the ranges of average diameters overlap. The average diameters of silica particles and magnesia particles may be the same from 5 to 10 µm where the ranges of average diameters overlap. A content ratio of the alumina and the titania is set from 1:0.7 to 1:0.9 in terms of mole ratio. The above mixture may include a firing aid, a molding aid, an organic binder, a dispersion medium, and a pore-forming agent as necessary. In the above raw materials, silica and magnesia also serve as the firing aid. A firing aid may include an oxide of Y, La, Na, K, Ca, Sr, or Ba in addition to silica and magnesia. Examples of a molding aid include an ethylene glycol, a dextrin, a fatty acid, a fatty acid soap, and a polyalcohol. An organic binder may be a hydrophilic organic polymer such as carboxymethyl cellulose, polyvinyl alcohol, methyl cellulose, and ethyl cellulose. A dispersion medium may be a dispersion medium formed only from water, or a dispersion medium formed with more than or equal to 50% by volume of water and an organic solvent. An organic solvent may be an alcohol such as benzene and methanol. A pore-forming agent may be micro hollow spherical particles such as balloons, spherical acrylic particles, a graphite, and a starch. Examples of balloons include alumina balloons, glass microballoons, Shirasu balloons, Fly Ash (FA) balloons, and mullite balloons.

The mixture may further contain other components. Other components may be, for example, a plasticizer, a dispersant, or a lubricant. Examples of a plasticizer include a polyoxyalkylene compound such as polyoxyethylene alkyl ether and polyoxypropylene alkyl ether. An example of a dispersant is a sorbitan fatty acid ester. An example of a lubricant is a glycerin.

### Molding Process

The molding process is a process for producing a molded honeycomb body by molding the mixture obtained through the mixing process. The molded honeycomb body may be produced, for example, by extruding the mixture using an extrusion die so that the molded honeycomb body would have the same form as the honeycomb structure after firing and shrinking is performed in the subsequent firing process. More specifically, the molded honeycomb body is produced by extruding the wall portion 13, which forms the tubular circumferential wall 11 and the partition walls 12 of the honeycomb structure, in a single process. Alternatively, a molded body of which the shape corresponds to part of the honeycomb structure may be molded through extrusion. More specifically, the molded body of which the shape corresponds to part of the honeycomb structure is molded, and the molded bodies are combined to produce the molded honeycomb body having the same shape as the honeycomb structure. When necessary, the molded body obtained through the molding process undergoes cell sealing, drying, and degreasing.

### Firing Process

The firing process is a process for firing the molded body obtained through the molding process at 1400 to 1600C°. As shown in Fig. 3(a), during the firing process, the titania reacts on the surface of the alumina and forms a phase of aluminum titanate. When the alumina is left inside the phase of aluminum titanate, the alumina is in a state contained in the aluminum titanate. The firing may be performed using a known single furnace such as a batch furnace or a continuous furnace. Preferably, the firing temperature is from 1450 to 1550°C. The firing time is not particularly specified, but the firing is preferably continued for 1 to 20 hours under the above firing temperature. More preferably, the firing is continued for 1 to 10 hours. Further, it is preferred that the firing process is performed under an atmospheric environment. The level of oxygen in the atmospheric environment may be adjusted by adding an inert gas such as nitrogen gas or argon gas.

The honeycomb structure of the present embodiment is manufactured by performing the mixing process, the molding process, and the firing process. The area ratio of the alumina contacting the pore portion in the surface area of the base material portion can be controlled, for example, by adjusting the average diameters and the mixing ratio of the raw materials and the firing condition of the molded honeycomb body.

The advantages of the present embodiment will now be described.
(1) With the honeycomb structure of the present embodiment, the alumina is contained in the aluminum titanate so that the area ratio of the alumina occupying a portion contacting the pore portion in the surface area of the base material portion is less than 10%. Accordingly, most of the frames in the base material portion are formed from the aluminum titanate. This maintains the low thermal expansibility of the aluminum titanate. In addition, the thermal shock resistance is increased when combined with the high thermal conductivity of the alumina contained in the aluminum titanate. Further, the high temperature when in use causes thermal expansion of the contained alumina and reduces the size of gaps resulting from fine cracks formed in the aluminum titanate. This increases the mechanical strength of the honeycomb structure.
(2) The base material portion contains 10 to 30% by volume of alumina so that the mechanical strength of the wall portion is increased compared to when the base material portion is formed only from aluminum titanate. Further, the content rate of alumina is desirable for the distribution structure in which the alumina is contained in the aluminum titanate.
(3) The alumina particles, which form the base material portion, have an average diameter of 1 to 20 µm so that alumina is contained in the base material portion in order to raise the thermal conductivity and increase the thermal shock resistance.
(4) The base material portion containing silicon elements and magnesium elements restricts thermal decomposition of the aluminum titanate.
(5) The pores in the pore portion having an average diameter of 10 to 25 µm limit pressure loss when the honeycomb structure is used in an exhaust gas purification filter.
(6) The raw materials used in the method for manufacturing the honeycomb structure of the present embodiment include alumina particles with an average diameter of 20 to 50 µm, titania particles with an average diameter of 0.1 to 1 µm, silica particles with an average diameter of 5 to 20 µm, and magnesia particles with an average diameter of 1 to 10 µm, where the average diameter of alumina particles ≥ the average diameter of silica particles ≥ the average diameter of magnesia particles ≥ the average diameter of titania particles is satisfied. Further, the content ratio of alumina and titania is set from 1:0.7 to 1:0.9 in terms of mole ratio. That is, the diameter of the alumina particles is set to be larger than the diameter of the titania particles, and the content of the alumina is set to be higher than the content of the titania. Thus, even when the reaction of titania on the surface of alumina consumes all the titania and forms aluminum titanate, alumina remains inside the aluminum titanate. Accordingly, the honeycomb structure is manufactured with alumina contained in the aluminum titanate so that the area ratio of the alumina occupying a portion contacting the pore portion in the surface area of the base material portion is less than 10%. This increases the thermal shock resistance and mechanical strength of the manufactured honeycomb structure. In contrast, as shown in Fig. 3(b), when the diameters of alumina particles and titania particles are substantially the same and the contents of alumina and titania are substantially the same, the alumina fully reacts with the titania during the firing process and is easily lost. In such a case, it is difficult to contain alumina in the aluminum titanate.

The present embodiment may be modified as described below. Also, the components disclosed in the above embodiment and the modified examples below may be combined.

The wall portion of the present embodiment is not limited to the tubular circumferential wall and partition walls forming the honeycomb-shaped cross-section and defining the cells extending inside the circumferential wall in the axial direction of the circumferential wall. The wall portion may include only the partition walls. In this case, the tubular circumferential wall may be a covering layer formed on the outer circumference of the partition walls.

### Examples

Specific examples of the above embodiment will now be described.

### Example 1

A mixture having the following composition was prepared.
Alumina particles with average diameter of 40 µm: 41.9% by mass
Silica particles with average diameter of 10 µm: 2.6% by mass
Magnesia particles with average diameter of 3.5 µm: 1.2% by mass
Titania particles with average diameter of 0.5 µm: 26.8% by mass
Methylcellulose (organic binder): 6.5% by mass
Sorbitan fatty acid ester (dispersant): 2.2% by mass
Polyoxyalkylene compound (plasticizer): 0.7% by mass
Acrylic resin particles with average diameter of 16 µm (pore-forming agent): 3.6% by mass
Water (dispersion medium): 14.5% by mass

A molded honeycomb body was produced with this mixture using an extrusion apparatus. Then, the cells in the molded body were alternately sealed by a sealing agent having the same composition as the above mixture. The molded body was preserved for 15 hours at 1500°C under an atmospheric environment to produce a tubular honeycomb structure according to example 1 that is 100 mm in diameter, 137 mm in length, 0.3 mm in thickness at circumferential wall, 0.125 mm in thickness at partition walls, and having a cell density of 34.1 cells per cm². Fig. 4 shows a photomicrograph of a cross-section of the wall portion of the honeycomb structure according to example 1.

### Example 2

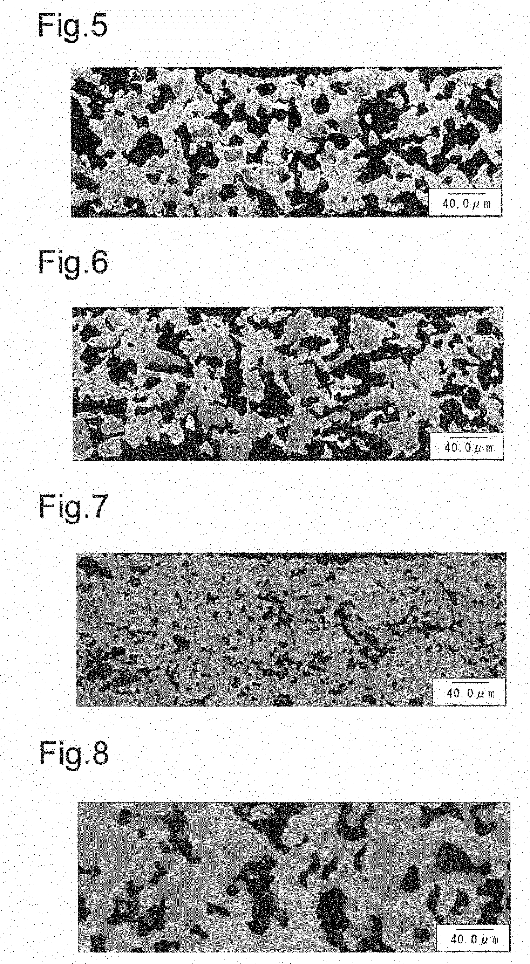

A honeycomb structure according to example 2 is a honeycomb structure produced in the same manner as example 1 except that the average diameter of alumina particles was changed to 30 µm. Fig. 5 shows a photomicrograph of a cross-section of the wall portion of the honeycomb structure according to example 2.

### Example 3

A honeycomb structure according to example 3 is a honeycomb structure produced in the same manner as example 1 except in that the firing temperature was changed to 1450°C. Fig. 6 shows a photomicrograph of a cross-section of the wall portion of the honeycomb structure according to example 3.

### Comparative Example 1

A honeycomb structure according to comparative example 1 is a honeycomb structure produced in the same manner as example 1 except in that the average diameter of alumina particles was changed to 5 µm. Fig. 7 shows a photomicrograph of a cross-section of the wall portion of the honeycomb structure according to comparative example 1.

### Comparative Example 2

A honeycomb structure according to comparative example 2 is a honeycomb structure produced in the same manner as example 1 except in that the content of alumina particles was changed to 46.4% by mass and the content of titania particles was changed to 22.3% by mass. Fig. 8 shows a photomicrograph of a cross-section of the wall portion of the honeycomb structure according to comparative example 2.

### Evaluation Tests

The porosity, content rate of alumina, area ratio of alumina, mechanical strength, and thermal expansibility of the honeycomb structures of the examples and the comparative examples were measured. The flexural strength of the wall portion was measured as mechanical strength. The results are shown in table 1. The porosity of the honeycomb structures were measured through mercury porosimetry with an angle of contact at 130° and a surface tension of 485 mN/m. The content rate of alumina, the area ratio of alumina, and the average diameter of alumina particles in the honeycomb structures were measured through the methods described above.

The flexural strength of the honeycomb structures was measured as described below. First, as samples for the three-point flexural tests, ten samples were cut out from the honeycomb structures of the examples and the comparative examples with each sample having a size of 2 cells × 4 cells × 40 mm excluding the outer circumferential wall and sealed portions. Then, a load was applied in a direction perpendicular to the main surface of each measurement sample (larger outer circumferential surface of sample) to measure the breaking load (load that breaks the sample). The breaking loads of the ten samples were measured. The average value was obtained as the flexural strength. The three-point flexural tests were performed with reference to JIS R 1601 using Instron 5582 with a 30 mm span length at a speed of 1 mm/min. The coefficient of thermal expansion of the honeycomb structures were measured with a thermal expansibility measurement apparatus (NETZSCH DIL402C manufactured by BRUKER).

**Table 1**

| | Example 1 | Example 2 | Example 3 | Comparative Example 1 | Comparative Example 2 |
|---|---|---|---|---|---|
| Porosity (% by volume) | 45 | 45 | 45 | 45 | 45 |
| Alumina Content Rate (% by volume) | 10 | 16 | 21 | 8 | 32 |
| Alumina Area Ratio (%) | 1.1 | 1.1 | 4.4 | 2.5 | 12 |
| Thermal Expansion Coefficient (× 10⁻⁶/°C) | 0.5 | 0.9 | 1.7 | 0.8 | 4.2 |
| Flexural Strength (MPa) | 5 | 5 | 5 | 3 | 8 |

As shown in table 1, the honeycomb structures of examples 1, 2, and 3 have small thermal expansion coefficients and higher flexural strengths than the honeycomb structure of comparative example 1. Further, the honeycomb structures of examples 1, 2, and 3 have smaller thermal expansion coefficients than the honeycomb structure of comparative example 2. Thus, the honeycomb structures of examples 1, 2, and 3 have low thermal expansibility and high mechanical strength so that the base material portion is not easily cracked even when used in an exhaust gas purification filter.

### DESCRIPTION OF REFERENCE CHARACTERS

11) circumferential wall; 12) partition wall; 13) wall portion

## Claims

1. A honeycomb structure, comprising:
a wall portion including a base material portion and a pore portion, wherein
a ratio of the pore portion in the wall portion is 40 to 70% by volume,
the base material portion is formed from an aluminum titanate-alumina composite ceramic containing 10 to 30% by volume of alumina, and
the alumina is contained in the aluminum titanate so that an area ratio of the alumina occupying a portion contacting the pore portion in a surface area of the base material portion is less than 10%.

2. The honeycomb structure according to claim 1, wherein the alumina has an average particle diameter of 1 to 20 µm.

3. The honeycomb structure according to claim 1 or 2, wherein the aluminum titanate-alumina composite ceramic contains silicon element and magnesium element.

4. The honeycomb structure according to any one of claims 1 to 3, wherein an average diameter of pores in the pore portion is 10 to 25 µm.

## Patentansprüche

1. Wabenstruktur, die:
einen Wandabschnitt aufweist, der einen Grundmaterialabschnitt und einen Porenabschnitt umfasst, wobei
ein Verhältnis des Porenabschnitts im Wandabschnitt 40 bis 70 Vol.-% beträgt,
der Grundmaterialabschnitt aus einer Aluminiumtitanat-Aluminiumoxid-Verbundkeramik, die 10 bis 30 Vol.-% Aluminiumoxid enthält, gebildet ist, und
das Aluminiumoxid in dem Aluminiumtitanat enthalten ist, so dass ein Flächenverhältnis des Aluminiumoxids, das einen Abschnitt einnimmt, der den Porenabschnitt in einer Oberfläche des Grundmaterialabschnitts berührt, weniger als 10% beträgt.

2. Wabenstruktur nach Anspruch 1, wobei das Aluminiumoxid einen durchschnittlichen Teilchendurchmesser von 1 bis 20 µm hat.

3. Wabenstruktur nach Anspruch 1 oder 2, wobei die Aluminiumtitanat-Aluminiumoxid-Verbundkeramik ein Siliziumelement und ein Magnesiumelement enthält.

4. Wabenstruktur nach einem der Ansprüche 1 bis 3, wobei ein durchschnittlicher Porendurchmesser im Porenabschnitt 10 bis 25 µm beträgt.

## Revendications

1. Structure en nid d'abeilles, comprenant :
une partie de paroi comportant une partie de matériau de base et une partie poreuse, dans laquelle
un rapport de la partie poreuse dans la partie de paroi est de 40 à 70% en volume,
la partie de matériau de base est formée à partir d'une céramique composite de titanate d'aluminium-alumine contenant 10 à 30% en volume d'alumine, et
l'alumine est contenue dans le titanate d'aluminium de sorte qu'un rapport de surface de l'alumine occupant une partie en contact avec la partie poreuse dans une superficie de la partie de matériau de base soit inférieur à 10%.

2. Structure en nid d'abeilles selon la revendication 1, dans laquelle l'alumine a un diamètre moyen de particules allant de 1 à 20 µm.

3. Structure en nid d'abeilles selon la revendication 1 ou 2, dans laquelle la céramique composite de titanate d'aluminium-alumine contient un élément silicium et un élément magnésium.

4. Structure en nid d'abeilles selon l'une quelconque des revendications 1 à 3, dans laquelle un diamètre moyen des pores dans la partie poreuse est de 10 à 25 µm.
